# EUROPEAN PATENT APPLICATION

(11) **EP 3 851 939 A1**
(43) Date of publication of application: **21.07.2021**
(21) Application number: 21150649.8
(22) Date of filing: 08.01.2021
(51) Int. Cl.: G06F 3/01

(54) **POSITIONING A USER-CONTROLLED SPATIAL SELECTOR BASED ON EXTREMITY TRACKING INFORMATION AND EYE TRACKING INFORMATION**

(30) Priority: 14.01.2020 US 202062961026 P
(71) Applicant: Apple Inc., Cupertino CA 95014 (US)
(72) Inventor: BURNS, Aaron Mackay, Cupertino, CA California 95014 (US); CAZAMIAS, Jordan Alexander, Cupertino, CA California 95014 (US); GEORG, Nicolai Philip, Cupertino, CA California 95014 (US)
(74) Representative: Wardle, Callum Tarn

(57) **Abstract**

A method includes detecting, via a first one of a plurality of input devices, a primary input directed to a first candidate virtual spatial location of a computer-generated reality (CGR) environment. The first candidate virtual spatial location is an output of an extremity tracking function based on the primary input. The method includes detecting, via a second one of the plurality of input devices, a secondary input directed to a second candidate virtual spatial location of the CGR environment. The second candidate virtual spatial location is an output of an eye tracking function based on the secondary input. The method includes positioning a user-controlled spatial selector to a virtual spatial location of the CGR environment as a function of the first and second candidate virtual spatial locations.

## Description

### CROSS-REFERENCE TO RELATED APPLICATION

This application claims priority to U.S. Provisional Patent App. No. 62/961,026 filed on January 14, 2020, which is hereby incorporated by reference in its entirety.

### TECHNICAL FIELD

The present disclosure relates to positioning a user-controlled spatial selector, and, in particular, positioning the user-controlled spatial selector based on extremity tracking information and eye tracking information.

### BACKGROUND

A previously available device may display a computer-generated reality environment. However, current applications do not provide a mechanism for accurately determining a virtual spatial location of a virtual contact between a virtual object and a user-controlled spatial selector. Current applications also do not provide a mechanism for accurately determining when the virtual contact occurs. For example, some systems utilize extremity tracking to estimate a position of a user's extremities relative to the virtual object. However, the estimate provided by the extremity tracking is inaccurate, and therefore the assessment as to whether the user is selecting the virtual object is likewise inaccurate.

### SUMMARY

In accordance with some implementations, a method is performed at an electronic device with one or more processors, a non-transitory memory, and a plurality of input devices. The method includes detecting, via a first one of the plurality of input devices, a primary input directed to a first candidate virtual spatial location of a computer-generated reality (CGR) environment. The first candidate virtual spatial location is an output of an extremity tracking function based on the primary input. The method includes detecting, via a second one of the plurality of input devices, a secondary input directed to a second candidate virtual spatial location of the CGR environment. The second candidate virtual spatial location is an output of an eye tracking function based on the secondary input. The method includes positioning a user-controlled spatial selector to a virtual spatial location of the CGR environment as a function of the first and second candidate virtual spatial locations.

In accordance with some implementations, an electronic device includes one or more processors, a non-transitory memory, and a plurality of input devices. The one or more programs are stored in the non-transitory memory and configured to be executed by the one or more processors and the one or more programs include instructions for performing or causing performance of the operations of any of the methods described herein. In accordance with some implementations, a non-transitory computer readable storage medium has stored therein instructions which when executed by one or more processors of an electronic device, cause the device to perform or cause performance of the operations of any of the methods described herein. In accordance with some implementations, an electronic device includes means for performing or causing performance of the operations of any of the methods described herein. In accordance with some implementations, an information processing apparatus, for use in an electronic device, includes means for performing or causing performance of the operations of any of the methods described herein.

### BRIEF DESCRIPTION OF THE DRAWINGS

For a better understanding of the various described implementations, reference should be made to the Description, below, in conjunction with the following drawings in which like reference numerals refer to corresponding parts throughout the figures.
Figure 1 is a block diagram of an example of a portable multifunction device in accordance with some implementations.
Figure 2 is an example of an operating environment in accordance with some implementations.
Figures 3A-3E are an example of positioning a user-controlled spatial selector within a CGR environment based on extremity tracking and eye tracking in accordance with some implementations.
Figure 4 is an example of a block diagram of a system for positioning a user-controlled spatial selector within a CGR environment based on extremity tracking and eye tracking in accordance with some implementations.
Figure 5 is a flow diagram of a method of positioning a user-controlled spatial selector within a CGR environment based on extremity tracking and eye tracking in accordance with some implementations.

### SUMMARY

Some systems utilize hand tracking in order to determine a spatial selection point within an augmented reality (AR) or virtual reality (VR) environment. For example, the hand tracking determines a hand tracking region associated with a hand of a user, and the system may select the center point of the hand tracking region as the spatial selection point. However, because of inaccuracies of the hand tracking, the spatial selection point often does not correspond to the actual location of the hand of the user. In some circumstances, the offset between the spatial selection point and the actual location results in the system erring in determining which, of a plurality of displayed virtual elements, the user is attempting to select.

By contrast, various implementations disclosed herein include positioning a user-controlled spatial selector within a computer-generated reality (CGR) environment based on extremity tracking information and eye tracking information. By using the extremity tracking information and the eye tracking information, an electronic device determines a more accurate assessment as to whether the user is selecting the virtual object than previous systems that do not utilize eye tracking. In some implementations, the electronic device determines respective confidence levels associated with extremity tracking and eye tracking, and uses the respective confidence levels to position the user-controlled spatial selector. For example, the eye tracking characteristics include characteristics of a CGR environment (e.g., brightness level of the CGR environment, contrast level between the CGR environment and a CGR object, likelihood that the CGR object is selected), whether user is looking in periphery, historical data of the user's eye gaze location, and/or the like. In some implementations, the electronic device determines extremity tracking characteristics (e.g., user is holding a pencil, user's extremity is shaky) and uses the extremity tracking characteristics to determine a confidence level associated with the extremity tracking data.

### DESCRIPTION

Reference will now be made in detail to implementations, examples of which are illustrated in the accompanying drawings. In the following detailed description, numerous specific details are set forth in order to provide a thorough understanding of the various described implementations. However, it will be apparent to one of ordinary skill in the art that the various described implementations may be practiced without these specific details. In other instances, well-known methods, procedures, components, circuits, and networks have not been described in detail so as not to unnecessarily obscure aspects of the implementations.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described implementations. The first contact and the second contact are both contacts, but they are not the same contact, unless the context clearly indicates otherwise.

The terminology used in the description of the various described implementations herein is for the purpose of describing particular implementations only and is not intended to be limiting. As used in the description of the various described implementations and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes", "including", "comprises", and/or "comprising", when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting", depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]", depending on the context.

Various examples of electronic systems and techniques for using such systems in relation to various computer-generated reality technologies are described.

A physical setting refers to a world with which various persons can sense and/or interact without use of electronic systems. Physical settings, such as a physical park, include physical elements, such as, for example, physical wildlife, physical trees, and physical plants. Persons can directly sense and/or otherwise interact with the physical setting, for example, using one or more senses including sight, smell, touch, taste, and hearing.

A computer-generated reality (CGR) setting, in contrast to a physical setting, refers to an entirely (or partly) computer-produced setting that various persons, using an electronic system, can sense and/or otherwise interact with. In CGR, a person's movements are in part monitored, and, responsive thereto, at least one attribute corresponding to at least one virtual object in the CGR setting is changed in a manner that is consistent with one or more physical laws. For example, in response to a CGR system detecting a person looking upward, the CGR system may adjust various audio and graphics presented to the person in a manner consistent with how such sounds and appearances would change in a physical setting. Adjustments to attribute(s) of virtual object(s) in a CGR setting also may be made, for example, in response to representations of movement (e.g., voice commands).

A person may sense and/or interact with a CGR object using one or more senses, such as sight, smell, taste, touch, and sound. For example, a person may sense and/or interact with objects that create a multi-dimensional or spatial acoustic setting. Multi-dimensional or spatial acoustic settings provide a person with a perception of discrete acoustic sources in multi-dimensional space. Such objects may also enable acoustic transparency, which may selectively incorporate audio from a physical setting, either with or without computer-produced audio. In some CGR settings, a person may sense and/or interact with only acoustic objects.

Virtual reality (VR) is one example of CGR. A VR setting refers to an enhanced setting that is configured to only include computer-produced sensory inputs for one or more senses. A VR setting includes a plurality of virtual objects that a person may sense and/or interact with. A person may sense and/or interact with virtual objects in the VR setting through a simulation of at least some of the person's actions within the computer-produced setting, and/or through a simulation of the person or her presence within the computer-produced setting.

Mixed reality (MR) is another example of CGR. An MR setting refers to an enhanced setting that is configured to integrate computer-produced sensory inputs (e.g., virtual objects) with sensory inputs from the physical setting, or a representation of sensory inputs from the physical setting. On a reality spectrum, an MR setting is between, but does not include, a completely physical setting at one end and a VR setting at the other end.

In some MR settings, computer-produced sensory inputs may be adjusted based on changes to sensory inputs from the physical setting. Moreover, some electronic systems for presenting MR settings may detect location and/or orientation with respect to the physical setting to enable interaction between real objects (i.e., physical elements from the physical setting or representations thereof) and virtual objects. For example, a system may detect movements and adjust computer-produced sensory inputs accordingly, so that, for example, a virtual tree appears fixed with respect to a physical structure.

Augmented reality (AR) is an example of MR. An AR setting refers to an enhanced setting where one or more virtual objects are superimposed over a physical setting (or representation thereof). As an example, an electronic system may include an opaque display and one or more imaging sensors for capturing video and/or images of a physical setting. Such video and/or images may be representations of the physical setting, for example. The video and/or images are combined with virtual objects, wherein the combination is then displayed on the opaque display. The physical setting may be viewed by a person, indirectly, via the images and/or video of the physical setting. The person may thus observe the virtual objects superimposed over the physical setting. When a system captures images of a physical setting, and displays an AR setting on an opaque display using the captured images, the displayed images are called a video pass-through. Alternatively, a transparent or semi-transparent display may be included in an electronic system for displaying an AR setting, such that an individual may view the physical setting directly through the transparent or semi-transparent displays. Virtual objects may be displayed on the semi-transparent or transparent display, such that an individual observes virtual objects superimposed over a physical setting. In yet another example, a projection system may be utilized in order to project virtual objects onto a physical setting. For example, virtual objects may be projected on a physical surface, or as a holograph, such that an individual observes the virtual objects superimposed over the physical setting.

An AR setting also may refer to an enhanced setting in which a representation of a physical setting is modified by computer-produced sensory data. As an example, at least a portion of a representation of a physical setting may be graphically modified (e.g., enlarged), so that the modified portion is still representative of (although not a fully-reproduced version of) the originally captured image(s). Alternatively, in providing video pass-through, one or more sensor images may be modified in order to impose a specific viewpoint different than a viewpoint captured by the image sensor(s). As another example, portions of a representation of a physical setting may be altered by graphically obscuring or excluding the portions.

Augmented virtuality (AV) is another example of MR. An AV setting refers to an enhanced setting in which a virtual or computer-produced setting integrates one or more sensory inputs from a physical setting. Such sensory input(s) may include representations of one or more characteristics of a physical setting. A virtual object may, for example, incorporate a color associated with a physical element captured by imaging sensor(s). Alternatively, a virtual object may adopt characteristics consistent with, for example, current weather conditions corresponding to a physical setting, such as weather conditions identified via imaging, online weather information, and/or weather-related sensors. As another example, an AR park may include virtual structures, plants, and trees, although animals within the AR park setting may include features accurately reproduced from images of physical animals.

Various systems allow persons to sense and/or interact with CGR settings. For example, a head mounted system may include one or more speakers and an opaque display. As another example, an external display (e.g., a smartphone) may be incorporated within a head mounted system. The head mounted system may include microphones for capturing audio of a physical setting, and/or image sensors for capturing images/video of the physical setting. A transparent or semi-transparent display may also be included in the head mounted system. The semi-transparent or transparent display may, for example, include a substrate through which light (representative of images) is directed to a person's eyes. The display may also incorporate LEDs, OLEDs, liquid crystal on silicon, a laser scanning light source, a digital light projector, or any combination thereof. The substrate through which light is transmitted may be an optical reflector, holographic substrate, light waveguide, optical combiner, or any combination thereof. The transparent or semi-transparent display may, for example, transition selectively between a transparent/semi-transparent state and an opaque state. As another example, the electronic system may be a projection-based system. In a projection-based system, retinal projection may be used to project images onto a person's retina. Alternatively, a projection-based system also may project virtual objects into a physical setting, for example, such as projecting virtual objects as a holograph or onto a physical surface. Other examples of CGR systems include windows configured to display graphics, headphones, earphones, speaker arrangements, lenses configured to display graphics, heads up displays, automotive windshields configured to display graphics, input mechanisms (e.g., controllers with or without haptic functionality), desktop or laptop computers, tablets, or smartphones.

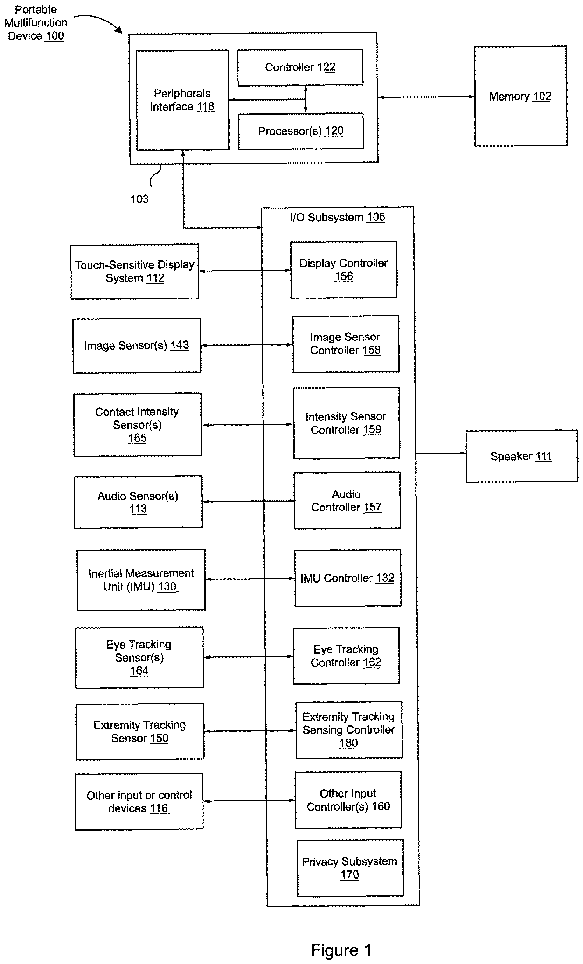

Figure 1 is a block diagram of an example of a portable multifunction device 100 (sometimes also referred to herein as the "electronic device 100" for the sake of brevity) in accordance with some implementations. The electronic device 100 includes memory 102 (which optionally includes one or more computer readable storage mediums), a memory controller 122, one or more processing units (CPUs) 120, a peripherals interface 118, an input/output (I/O) subsystem 106, a speaker 111, a touch-sensitive display system 112, an inertial measurement unit (IMU) 130, image sensor(s) 143 (e.g., camera), contact intensity sensor(s) 165, audio sensor(s) 113 (e.g., microphone), eye tracking sensor(s) 164 (e.g., included within a head-mountable device (HMD)), an extremity tracking sensor 150, and other input or control device(s) 116. In some implementations, the electronic device 100 corresponds to one of a mobile phone, tablet, laptop, wearable computing device, head-mountable device (HMD), head-mountable enclosure (e.g. the electronic device 100 slides into or otherwise attaches to a head-mountable enclosure), or the like. In some implementations, the head-mountable enclosure is shaped to form a receptacle for receiving the electronic device 100 with a display.

In some implementations, the peripherals interface 118, the one or more processing units 120, and the memory controller 122 are, optionally, implemented on a single chip, such as a chip 103. In some other implementations, they are, optionally, implemented on separate chips.

The I/O subsystem 106 couples input/output peripherals on the electronic device 100, such as the touch-sensitive display system 112 and the other input or control devices 116, with the peripherals interface 118. The I/O subsystem 106 optionally includes a display controller 156, an image sensor controller 158, an intensity sensor controller 159, an audio controller 157, an eye tracking controller 162, one or more input controllers 160 for other input or control devices, an IMU controller 132, an extremity tracking controller 180, and a privacy subsystem 170. The one or more input controllers 160 receive/send electrical signals from/to the other input or control devices 116. The other input or control devices 116 optionally include physical buttons (e.g., push buttons, rocker buttons, etc.), dials, slider switches, joysticks, click wheels, and so forth. In some alternate implementations, the one or more input controllers 160 are, optionally, coupled with any (or none) of the following: a keyboard, infrared port, Universal Serial Bus (USB) port, stylus, and/or a pointer device such as a mouse. The one or more buttons optionally include an up/down button for volume control of the speaker 111 and/or audio sensor(s) 113. The one or more buttons optionally include a push button. In some implementations, the other input or control devices 116 includes a positional system (e.g., GPS) that obtains information concerning the location and/or orientation of the electronic device 100 relative to a physical environment. In some implementations, the other input or control devices 116 includes a depth sensor (e.g., time of flight sensor) that obtains depth information associated with an eye gaze of a user.

The touch-sensitive display system 112 provides an input interface and an output interface between the electronic device 100 and a user. The display controller 156 receives and/or sends electrical signals from/to the touch-sensitive display system 112. The touch-sensitive display system 112 displays visual output to the user. The visual output optionally includes graphics, text, icons, video, and any combination thereof (collectively termed "graphics"). In some implementations, some or all of the visual output corresponds to user interface objects. As used herein, the term "affordance" refers to a user-interactive graphical user interface object (e.g., a graphical user interface object that is configured to respond to inputs directed toward the graphical user interface object). Examples of user-interactive graphical user interface objects include, without limitation, a button, slider, icon, selectable menu item, switch, hyperlink, or other user interface control.

The touch-sensitive display system 112 has a touch-sensitive surface, sensor, or set of sensors that accepts input from the user based on haptic and/or tactile contact. The touch-sensitive display system 112 and the display controller 156 (along with any associated modules and/or sets of instructions in the memory 102) detect contact (and any movement or breaking of the contact) on the touch-sensitive display system 112 and converts the detected contact into interaction with user-interface objects (e.g., one or more soft keys, icons, web pages or images) that are displayed on the touch-sensitive display system 112. In an example implementation, a point of contact between the touch-sensitive display system 112 and the user corresponds to a finger of the user or a stylus.

The touch-sensitive display system 112 optionally uses LCD (liquid crystal display) technology, LPD (light emitting polymer display) technology, or LED (light emitting diode) technology, although other display technologies are used in other implementations. The touch-sensitive display system 112 and the display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with the touch-sensitive display system 112.

The user optionally makes contact with the touch-sensitive display system 112 using any suitable object or appendage, such as a stylus, a finger, and so forth. In some implementations, the user interface is designed to work with finger-based contacts and gestures, which can be less precise than stylus-based input due to the larger area of contact of a finger on the touch screen. In some implementations, the electronic device 100 translates the rough finger-based input into a precise pointer/cursor position or command for performing the actions desired by the user.

The speaker 111 and the audio sensor(s) 113 provide an audio interface between a user and the electronic device 100. Audio circuitry receives audio data from the peripherals interface 118, converts the audio data to an electrical signal, and transmits the electrical signal to the speaker 111. The speaker 111 converts the electrical signal to human-audible sound waves. Audio circuitry also receives electrical signals converted by the audio sensors 113 (e.g., a microphone) from sound waves. Audio circuitry converts the electrical signal to audio data and transmits the audio data to the peripherals interface 118 for processing. Audio data is, optionally, retrieved from and/or transmitted to the memory 102 and/or RF circuitry by the peripherals interface 118. In some implementations, audio circuitry also includes a headset jack. The headset jack provides an interface between audio circuitry and removable audio input/output peripherals, such as output-only headphones or a headset with both output (e.g., a headphone for one or both ears) and input (e.g., a microphone).

The inertial measurement unit (IMU) 130 includes accelerometers, gyroscopes, and/or magnetometers in order measure various forces, angular rates, and/or magnetic field information with respect to the electronic device 100. Accordingly, according to various implementations, the IMU detects one or more positional change inputs of the electronic device 100, such as the electronic device 100 being shaken, rotated, moved in a particular direction, and/or the like.

The image sensor(s) 143 capture still images and/or video. In some implementations, an image sensor 143 is located on the back of the electronic device 100, opposite a touch screen on the front of the electronic device 100, so that the touch screen is enabled for use as a viewfinder for still and/or video image acquisition. In some implementations, another image sensor 143 is located on the front of the electronic device 100 so that the user's image is obtained (e.g., for selfies, for videoconferencing while the user views the other video conference participants on the touch screen, etc.). In some implementations, the image sensor(s) are integrated within an HMD.

The contact intensity sensors 165 detect intensity of contacts on the electronic device 100 (e.g., a touch input on a touch-sensitive surface of the electronic device 100). The contact intensity sensors 165 are coupled with the intensity sensor controller 159 in the I/O subsystem 106. The contact intensity sensor(s) 165 optionally include one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). The contact intensity sensor(s) 165 receive contact intensity information (e.g., pressure information or a proxy for pressure information) from the physical environment. In some implementations, at least one contact intensity sensor 165 is collocated with, or proximate to, a touch-sensitive surface of the electronic device 100. In some implementations, at least one contact intensity sensor 165 is located on the side of the electronic device 100.

The eye tracking sensor(s) 164 detect eye gaze of a user of the electronic device 100 and generate eye tracking data indicative of the eye gaze of the user. In various implementations, the eye tracking data includes data indicative of a fixation point (e.g., point of regard) of the user on a display panel, such as a display panel within a head-mountable device (HMD), a head-mountable enclosure, or within a heads-up display.

The extremity tracking sensor 150 obtains extremity tracking data indicative of a position of an extremity of a user. For example, in some implementations, the extremity tracking sensor 150 corresponds to a hand tracking sensor that obtains hand tracking data indicative of a position of a hand or a finger of a user within a CGR environment. In some implementations, the extremity tracking sensor 150 utilizes computer vision techniques to estimate the pose of the extremity based on camera images.

In various implementations, the electronic device 100 includes a privacy subsystem 170 that includes one or more privacy setting filters associated with user information, such as user information included in the eye gaze data and/or body position data associated with a user. In some implementations, the privacy subsystem 170 selectively prevents and/or limits the electronic device 100 or portions thereof from obtaining and/or transmitting the user information. To this end, the privacy subsystem 170 receives user preferences and/or selections from the user in response to prompting the user for the same. In some implementations, the privacy subsystem 170 prevents the electronic device 100 from obtaining and/or transmitting the user information unless and until the privacy subsystem 170 obtains informed consent from the user. In some implementations, the privacy subsystem 170 anonymizes (e.g., scrambles or obscures) certain types of user information. For example, the privacy subsystem 170 receives user inputs designating which types of user information the privacy subsystem 170 anonymizes. As another example, the privacy subsystem 170 anonymizes certain types of user information likely to include sensitive and/or identifying information, independent of user designation (e.g., automatically).

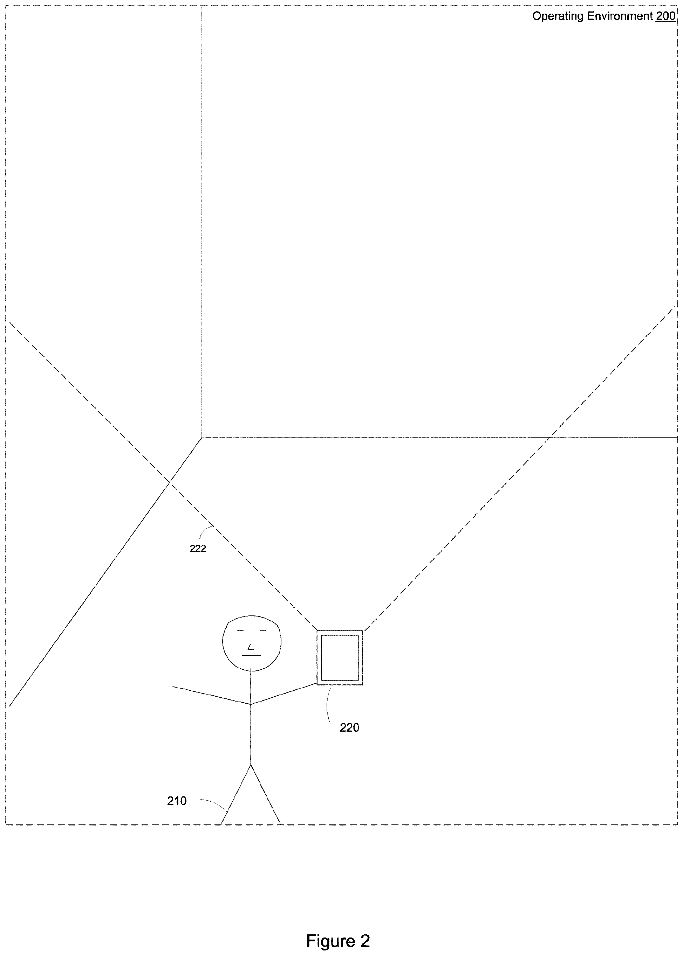

Figure 2 is an example of an operating environment 200 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein.

As illustrated in Figure 2, an operating environment 200 includes a user 210 holding an electronic device 220. In some implementations, the electronic device 220 corresponds to a mobile device, such as a smartphone, laptop, tablet, etc. In some implementations, the electronic device 220 is similar to and adapted from the electronic device 100 in Figure 1.

According to various implementations, the electronic device 220 displays, via a display device included in the electronic device 220, a CGR environment. In some implementations, the CGR environment corresponds to a virtual reality (VR) environment, which is independent of features of a physical (e.g., real-world) environment associated with the electronic device 220. In some implementations, the CGR environment corresponds to an augmented reality (AR) environment that includes virtual objects as well as features of the physical environment, such as obtained via an image sensor integrated in the electronic device 220.

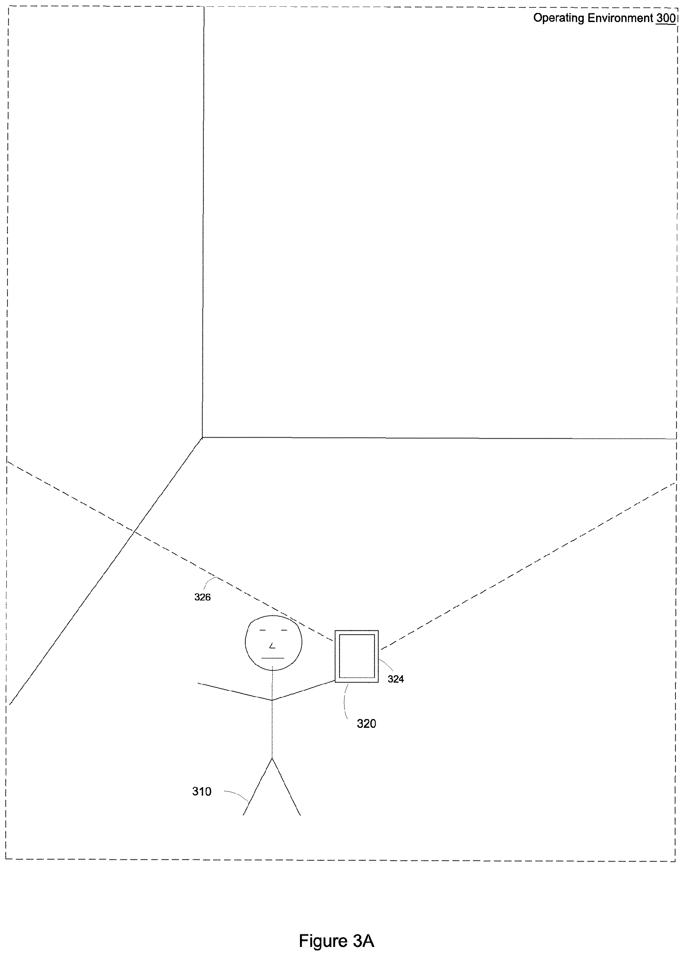

The electronic device 220 is associated with a field-of-view 222. For example, the electronic device 220 includes an image sensor (e.g., a camera) that capture a portion of the operating environment 200, and the portion is defined by the field-of-view 222 of the image sensor. According to various implementations, based on image data from the image sensor, the electronic device 220 performs extremity tracking and eye tracking in order to position a user-controlled spatial selector to a virtual spatial location of the CGR environment, such as is described with reference to Figures 3A-3E, 4, and 5.

Figures 3A-3E are an example of positioning a user-controlled spatial selector within a CGR environment based on extremity tracking and eye tracking in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein.

As illustrated in Figure 3A, an operating environment 300 includes a user 310 with a left hand 312 and a right hand 314. The left hand 312 of the user 310 is holding an electronic device 320 that includes a display device 324, such as a display panel. The electronic device 320 is associated with a field-of-view 326. For example, the electronic device 320 includes an image sensor (e.g., a camera) that captures a portion of the operating environment 300, and the portion is defined by the field-of-view 326 of the image sensor.

In some implementations, the electronic device 320 corresponds to a head-mountable device (HMD) that includes an integrated display (e.g., a built-in display) that displays a CGR environment, such as an AR environment or a VR environment. In some implementations, the electronic device 320 includes a head-mountable enclosure. In various implementations, the head-mountable enclosure includes an attachment region to which another device with a display can be attached. In various implementations, the head-mountable enclosure is shaped to form a receptacle for receiving another device that includes a display (e.g., the electronic device 220 illustrated in Figure 2). For example, in some implementations, the electronic device 220 slides/snaps into or otherwise attaches to the head-mountable enclosure. In some implementations, the display of the device attached to the head-mountable enclosure presents (e.g., displays) the CGR environment. For example, in some implementations, the electronic device 220 corresponds to a mobile phone that can be attached to the head-mountable enclosure. In various implementations, examples of the electronic device 220 include smartphones, tablets, media players, laptops, etc.

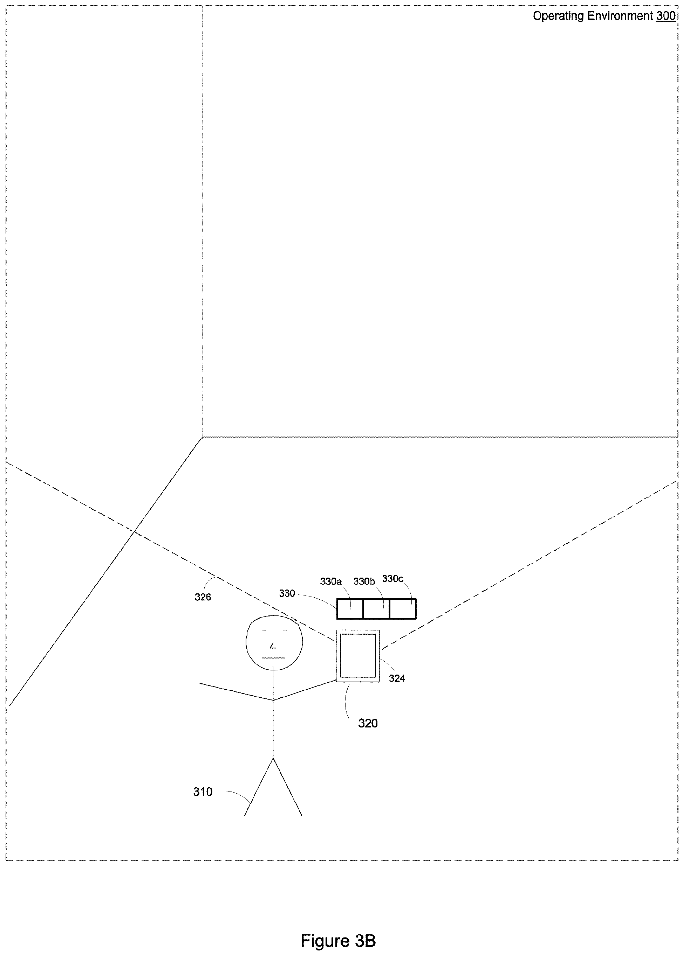

As illustrated in Figure 3B, the display device 324 of the electronic device 320 displays a virtual object 330 including a plurality of virtual affordances including a first virtual affordance 330a, a second virtual affordance 330b, and a third virtual affordance 330c. For example, each of the plurality of virtual affordances 330a-330c is user-selectable, and in response to a selection, the electronic device 320 performs a corresponding operation, such as changing the displayed CGR environment.

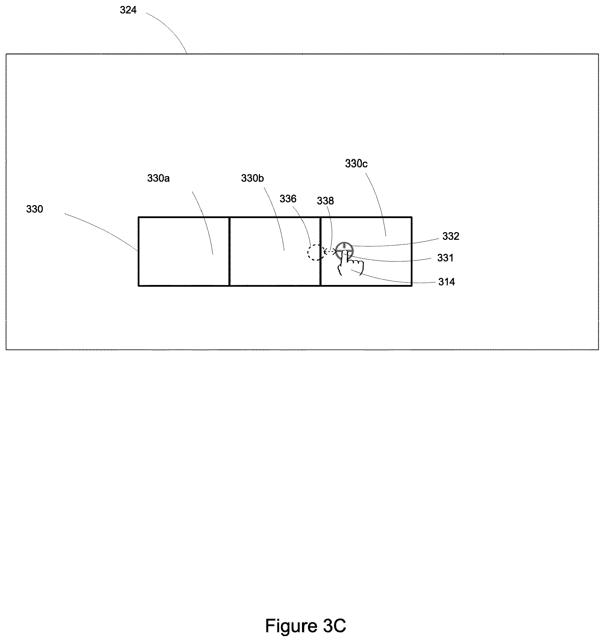

As illustrated in Figure 3C, the display device 324 includes the virtual object 330. Moreover, the user 310 has turned to face the virtual object 330, and the user has raised the user's right hand 314 upwards towards the third virtual affordance 330c. A finger 331 of the right 314 interacts with (e.g., contacts) a portion of the third virtual affordance 330c. The portion of the third virtual affordance 330c is represented by contact region 332, which is illustrated in Figure 3C for purely explanatory purposes. The electronic device 320 performs an extremity tracking function with respect to the finger 331 of the right hand 314 in order to determine a first candidate virtual spatial location 336 of the CGR environment. The first candidate virtual spatial location 336 is illustrated in Figure 3C for purely explanatory purposes. The electronic device 320 detects, via a first input device, a primary input directed to the first candidate virtual spatial location 336. The first candidate virtual spatial location 336 may correspond to an estimated location within the virtual object 330 that the finger 331 contacts, as determined by the extremity tracking function. An offset line 338 is illustrated (for purely explanatory purpose) in Figure 3C in order to show a disparity between the contact region 332 associated with the finger 331 and the first candidate virtual spatial location 336. The disparity results from inherent inaccuracies of the extremity tracking function. Because the first candidate virtual spatial location 336 corresponds to the second virtual affordance 330b and the contact region 332 corresponds to the third virtual affordance 330c, the electronic device 320 may perform an operation that is contrary to an intended operation of the user 310. In order to account for the disparity, various implementations disclosed herein include the electronic device 320 utilizing eye tracking, in addition to the extremity tracking.

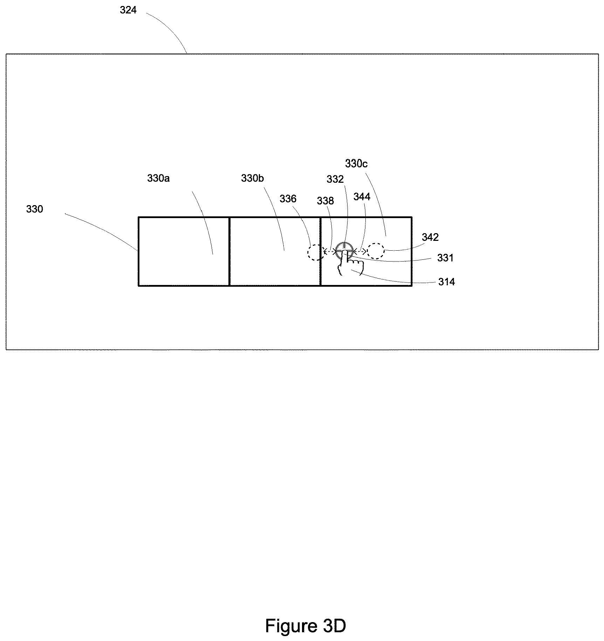

To that end, as illustrated in Figure 3D, the electronic device 320 implements an eye tracking function with respect to the finger 331 of the right hand 314 in order to determine a second candidate virtual spatial location 342 of the CGR environment. The second candidate virtual spatial location 342 is illustrated in Figure 3D for purely explanatory purposes. The electronic device 320 detects, via a second input device, a secondary input directed to the second candidate virtual spatial location 342. The second candidate virtual spatial location 342 may correspond to an estimated location within the virtual object 330 that the user 310 is looking at.

According to various implementations, the electronic device 320 utilizes a weighted combination of the extremity tracking function and the eye tracking function. For example, the electronic device 320 registers the second candidate virtual spatial location 342 at or near the point in time when the electronic device 320 determines, via the extremity tracking function, that the finger 331 is within a threshold distance from one of the plurality of virtual affordances 330a-330c. As another example, the electronic device 320 discards extremity tracking information when the eye tracking data indicates that the user 310 is looking in the periphery, which may indicate that the user 310 likely does not want to select a virtual affordance at that point in time. An offset line 344 is illustrated (for purely explanatory purpose) in Figure 3D in order to indicate a disparity between the contact region 332 associated with the finger 331 and the second candidate virtual spatial location 342. In some implementations, unlike the first candidate virtual spatial location 336, the second candidate virtual spatial location 342 is associated with the same, third virtual affordance 330c that is associated with the contact region 332.

The electronic device 320 positions a user-controlled spatial selector to a virtual spatial location of the CGR environment as a function of the first candidate virtual spatial location 336 and the second candidate virtual spatial location 342. For example, the position of the user-controlled spatial selector is approximately the halfway point between the first candidate virtual spatial location 336 and the second candidate virtual spatial location 342. As another example, the position of the user-controlled spatial selector depends on respective confidence levels associated with the first candidate virtual spatial location 336 and the second candidate virtual spatial location 342, as will be described below. Accordingly, the electronic device 320 reduces measurement errors associated with the extremity tracking by also utilizing eye tracking information.

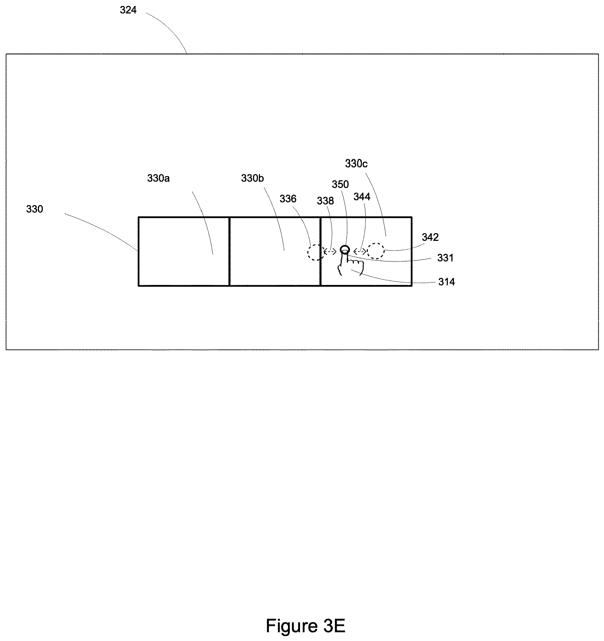

In some implementations, as illustrated in Figure 3E, the display device 324 of the electronic device 320 displays the user-controlled spatial selector 350 at the virtual spatial location within the CGR environment. By displaying the user-controlled spatial selector 350, the electronic device 320 provides feedback to the user 310 by indicating the currently measured position of the finger 331. Accordingly, the electronic device 320 increases the likelihood that the electronic device 320 selects a virtual affordance which was intended to be selected by the user 310.

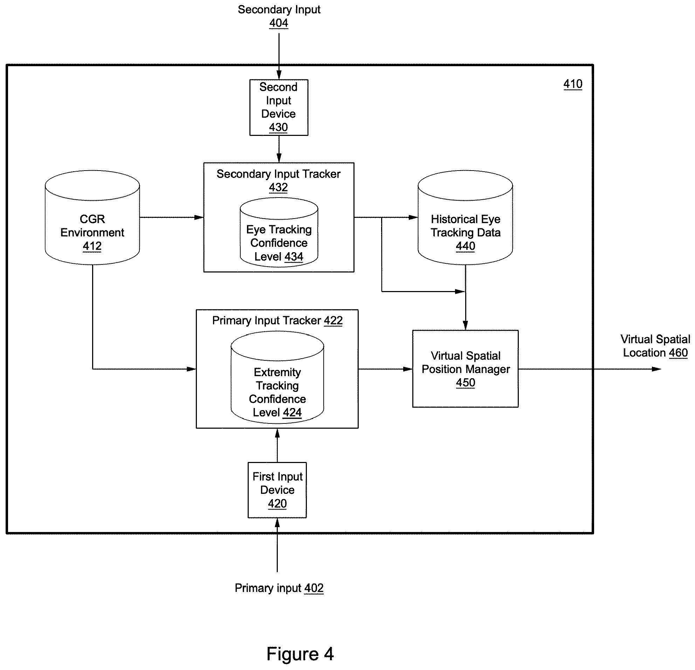

Figure 4 is an example of a block diagram of a system 410 for positioning a user-controlled spatial selector within a CGR environment based on extremity tracking and eye tracking in accordance with some implementations. In some implementations, the system 410 or components thereof are implemented by the electronic device 100 in Figure 1 or the electronic device 220 in Figure 2. In some implementations, the system 410 or components thereof are implemented by the electronic device 320 in Figures 3A-3E.

The system 410 includes a first input device 420 that detects a primary input 402 directed to a first candidate virtual spatial location of a CGR environment 412. For example, the first input device 420 includes an environmental sensor (e.g., an image sensor and/or depth sensor) that obtains environmental data associated with the CGR environment 412. The system 410 includes a primary input tracker 422 (e.g., an extremity tracker). In some implementations, the primary input tracker 422 implements an extremity tracking function based on the primary input 402. In some implementations, the primary input tracker 422 utilizes the primary input 402 and the CGR environment 412 in order to determine the first candidate virtual spatial location.

In some implementations, the system 410 utilizes an extremity tracking confidence level 424 that represents how confident the primary input tracker 422 is in the accuracy of the first candidate virtual spatial location. For example, the primary input tracker 422 assigns a relatively low confidence level to the primary input 402 because the primary input tracker 422 determines that the tracked extremity is unsteady, such as a shaky hand, or a portion of the tracked extremity is not visible in the data obtained by first input device 420. Accordingly, the system 410 weighs the first candidate virtual spatial location less than a second candidate virtual spatial location associated with eye tracking.

The system 410 includes a second input device 430 that detects a secondary input 404 directed to the second candidate virtual spatial location of the CGR environment 412. For example, the second input device 430 includes an environmental sensor (e.g., an image sensor and/or depth sensor) that obtains environmental data associated with the CGR environment 412. In some examples, the second input device 430 is a different device than first input device 420. In other examples, the second input device 430 is the same device as first input device 420.

The system 410 includes a secondary input tracker 432. In some implementations, the secondary input tracker 432 implements an eye tracking function based on the secondary input 404. For example, in some implementations, the system 410 determines, based on the secondary input 404, a depth estimation according to the eye tracking function, and determines a virtual spatial location 460 based at least in part on the depth estimation. In some implementations, the secondary input tracker 432 utilizes the secondary input 404 and the CGR environment 412 in order to determine the second candidate virtual spatial location.

In some implementations, the system 410 utilizes an eye tracking confidence level 434 that represents how confident the secondary input tracker 432 is in the accuracy of the second candidate virtual spatial location. For example, the secondary input tracker 432 assigns a relatively high confidence level to the secondary input 404 because the environmental data indicates a high luminance level for the CGR environment and/or a high level of contrast between a selectable virtual affordance within a CGR environment and the surrounding portion of the CGR environment. As another example, the secondary input tracker 432 assigns a relatively low confidence level to the secondary input 404 because the secondary input tracker 432 determines that an eye gaze is directed to a user's periphery, such as by detecting micro-saccades of the user's eyes. In some implementations, in determining the virtual spatial location 460 the system 410 weighs the first candidate virtual spatial location associated with extremity tracking and the second candidate virtual spatial location associated with eye tracking as a function of respective confidence levels.

In some implementations, the system 410 buffers, in a historical eye tracking datastore 440, historical data generated by the secondary input tracker 432. The system 410 may determine the virtual spatial location 460 as a function of the historical data. Using the historical data may be useful when a physical extremity of a user (e.g., a user's finger) obscures eye tracking.

The system 410 includes a virtual spatial position manager 450 that positions a user-controlled spatial selector to the virtual spatial location 460 of the CGR environment as a function of the first and second candidate virtual spatial locations. In some implementations, the virtual spatial position manager 450 positions the user-controlled spatial selector as a further function of the historical data associated with the secondary input tracker 432. In some implementations, the virtual spatial position manager 450 positions the user-controlled spatial selector based on respective confidence levels associated with the first and second candidate virtual spatial locations. For example, the virtual spatial position manager 450 determines, based at least on a characteristic of the primary input 402 and a characteristic of the secondary input 404, whether to use the secondary input 404 in positioning the user-controlled spatial selector to the virtual spatial location. In response to determining not to use the secondary input 404, the virtual spatial position manager 450 may set a nominal weight for the second candidate virtual spatial location.

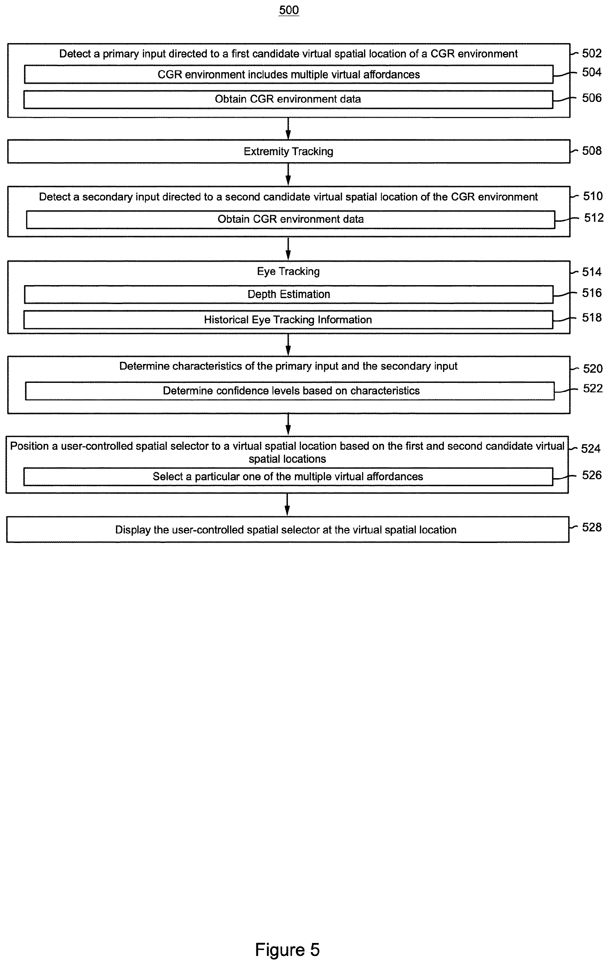

Figure 5 is a flow diagram of a method 500 of positioning a user-controlled spatial selector within a CGR environment based on extremity tracking and eye tracking in accordance with some implementations. In various implementations, the method 500 or portions thereof are performed by an electronic device (e.g., the electronic device 100 in Figure 1 or the electronic device 220 in Figure 2) and/or an HMD (e.g., the electronic device 320 in Figures 3A-3E). In some implementations, the method 500 is performed by processing logic, including hardware, firmware, software, or a combination thereof. In some implementations, the method 500 is performed by a processor executing code stored in a non-transitory computer-readable medium (e.g., a memory). In various implementations, some operations in method 500 are, optionally, combined and/or the order of some operations is, optionally, changed.

As represented by block 502, the method 500 includes detecting, via a first one of a plurality of input devices, a primary input directed to a first candidate virtual spatial location of a CGR environment. In some implementations, the first candidate virtual spatial location is an output of an extremity tracking function based on the primary input. For example, the first candidate virtual spatial location corresponds to one of a surface, affordance, or an object of the CGR environment. As represented by block 504, in some implementations, the CGR environment includes a plurality of virtual affordances, such as the first virtual affordance 330a, the second virtual affordance 330b, and the third virtual affordance 330c illustrated in Figure 3B. In some implementations, the plurality of virtual affordances satisfies a proximity criterion with respect to each other. For example, the plurality of virtual affordances borders each other or is less than a threshold distance away from each other.

The first candidate virtual spatial location may be within a particular one of the plurality of virtual affordances. In these circumstances, using a combination of extremity tracking and eye tracking helps in positioning a user-controlled spatial selector to a virtual spatial location located within a particular one of the plurality of virtual affordances that is intended to be selected by a user.

As represented by block 506, in some implementations, the method 500 includes obtaining, via the first one of the plurality of input devices, CGR environment data that represents the CGR environment. For example, an electronic device includes a combination of an image sensor, depth sensor, touch-sensitive surface sensor, and stylus input receiver (e.g., that receives stylus data from a stylus paired to the electronic device) for sensing the CGR environment. Moreover, in some implementations, the method 500 includes providing the CGR environment data to an extremity tracking sensor that implements the extremity tracking function.

As represented by block 508, the method 500 includes implementing the extremity tracking function. Namely, the first candidate virtual spatial location is an output of an extremity tracking function based on the primary input, such as is described above with reference to the primary input tracker 422 illustrated in Figure 4. In some implementations, the extremity tracking function is based on the CGR environment data.

As represented by block 510, the method 500 includes detecting, via a second one of the plurality of input devices, a secondary input directed to a second candidate virtual spatial location of the CGR environment. In some implementations, the second candidate virtual spatial location is an output of an eye tracking function based on the secondary input. For example, the second candidate virtual spatial location corresponds to a location within a particular one of a plurality of virtual affordances.

As represented by block 512, in some implementations, the method 500 includes obtaining, via the second one of the plurality of input devices, CGR environment data that represents the CGR environment. For example, an electronic device includes a combination of an image sensor, depth sensor, etc. for sensing the CGR environment. Moreover, in some implementations, the method 500 includes providing the CGR environment data to an eye tracking sensor that implements the eye tracking function.

As represented by block 514, the method 500 includes implementing the eye tracking function. For example, the eye tracking function determines an eye gaze of a user by using an eye tracking sensor integrated within an HMD. Details of the eye tracking function are described above with reference to the secondary input tracker 432 illustrated in Figure 4. As represented by block 516, in some implementations, the method 500 includes determining, based on the secondary input, a depth estimation according to the eye tracking function, wherein a virtual spatial location is a function of the depth estimation. For example, the secondary input tracker 432 determines the depth based on a vergence value associated with eyes of a user. As represented by block 518, in some implementations, the method 500 includes obtaining historical data associated with the eye tracking sensor, wherein the virtual spatial location is a further function of the historical data. In some implementations, an HMD stores eye tracking data and later retrieves and utilizes the stored eye tracking data. For example, the HMD utilizes the stored eye tracking data in response to determining that a user's extremity obscures a virtual affordance and thus reduces the accuracy of corresponding extremity tracking.

As represented by block 520, in some implementations, the method 500 includes determining characteristics of the primary input and the secondary input. The characteristics may be indicative of reliability (e.g., confidence level) of a respective input. For example, a determination that a user's eye gaze is in the user's periphery may indicate that eye tracking has a relatively low reliability level. On the other hand, a determination that user is steadily holding a pencil may indicate that extremity tracking has a relatively high reliability level. To that end, as represented by block 522, in some implementations, the method 500 includes determining a first confidence level for the first candidate virtual spatial location based on characteristics of the primary input and determining a second confidence level for the second candidate virtual spatial location based on characteristics of the secondary input. The virtual spatial location may be a further function of the first and second confidence levels. In some implementations, the method 500 includes determining, based at least on a characteristic of the primary input and a characteristic of the secondary input, whether to use the secondary input in positioning the user-controlled spatial selector to the virtual spatial location. For example, in accordance with a determination not to use the secondary input, the method 500 includes setting a nominal weight for the second candidate virtual spatial location. Setting the second candidate virtual spatial location to the nominal weight may include completely ignoring the second candidate virtual spatial location so that the virtual spatial location does not at all depend on the second candidate virtual spatial location.

As represented by block 524, the method 500 includes positioning a user-controlled spatial selector to a virtual spatial location of the CGR environment as a function of the first and second candidate virtual spatial locations. In some implementations, positioning the user-controlled spatial selector includes weighing the first and second candidate virtual spatial locations based on respective confidence levels. In some implementations, positioning the user-controlled spatial selector is a further function of depth estimation and/or historical data associated with eye tracking. In some implementations, positioning the user-controlled spatial selector is a further function of head pose information (e.g., head tilt) and/or body pose information (e.g., posture, gait).

As represented by block 526, in some implementations, the method 500 includes selecting a particular one of the plurality of virtual affordances based on the virtual spatial location. For example, with reference to Figures 3A-3E, the electronic device 320 selects the third virtual affordance 330c based on performing extremity tracking as well as eye tracking associated with the finger 331 of the user 310.

As represented by block 528, in some implementations, the method 500 includes displaying, via a display device included in the electronic device, the user-controlled spatial selector at the virtual spatial location. For example, with reference to Figure 3E, the display device 324 of the electronic device 320 displays the user-controlled spatial selector 350.

The present disclosure describes various features, no single one of which is solely responsible for the benefits described herein. It will be understood that various features described herein may be combined, modified, or omitted, as would be apparent to one of ordinary skill. Other combinations and sub-combinations than those specifically described herein will be apparent to one of ordinary skill, and are intended to form a part of this disclosure. Various methods are described herein in connection with various flowchart steps and/or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

Some or all of the methods and tasks described herein may be performed and fully automated by a computer system. The computer system may, in some cases, include multiple distinct computers or computing devices (e.g., physical servers, workstations, storage arrays, etc.) that communicate and interoperate over a network to perform the described functions. Each such computing device typically includes a processor (or multiple processors) that executes program instructions or modules stored in a memory or other non-transitory computer-readable storage medium or device. The various functions disclosed herein may be implemented in such program instructions, although some or all of the disclosed functions may alternatively be implemented in application-specific circuitry (e.g., ASICs or FPGAs or GP-GPUs) of the computer system. Where the computer system includes multiple computing devices, these devices may be co-located or not co-located. The results of the disclosed methods and tasks may be persistently stored by transforming physical storage devices, such as solid-state memory chips and/or magnetic disks, into a different state.

Various processes defined herein consider the option of obtaining and utilizing a user's personal information. For example, such personal information may be utilized in order to provide an improved privacy screen on an electronic device. However, to the extent such personal information is collected, such information should be obtained with the user's informed consent. As described herein, the user should have knowledge of and control over the use of their personal information.

Personal information will be utilized by appropriate parties only for legitimate and reasonable purposes. Those parties utilizing such information will adhere to privacy policies and practices that are at least in accordance with appropriate laws and regulations. In addition, such policies are to be well-established, user-accessible, and recognized as in compliance with or above governmental/industry standards. Moreover, these parties will not distribute, sell, or otherwise share such information outside of any reasonable and legitimate purposes.

Users may, however, limit the degree to which such parties may access or otherwise obtain personal information. For instance, settings or other preferences may be adjusted such that users can decide whether their personal information can be accessed by various entities. Furthermore, while some features defined herein are described in the context of using personal information, various aspects of these features can be implemented without the need to use such information. As an example, if user preferences, account names, and/or location history are gathered, this information can be obscured or otherwise generalized such that the information does not identify the respective user.

The disclosure is not intended to be limited to the implementations shown herein. Various modifications to the implementations described in this disclosure may be readily apparent to those skilled in the art, and the generic principles defined herein may be applied to other implementations without departing from the spirit or scope of this disclosure. The teachings of the invention provided herein can be applied to other methods and systems, and are not limited to the methods and systems described above, and elements and acts of the various implementations described above can be combined to provide further implementations. Accordingly, the novel methods and systems described herein may be implemented in a variety of other forms; furthermore, various omissions, substitutions and changes in the form of the methods and systems described herein may be made without departing from the spirit of the disclosure. The accompanying claims and their equivalents are intended to cover such forms or modifications as would fall within the scope and spirit of the disclosure.

## Claims

1. A method comprising:
at an electronic device including one or more processors, a non-transitory memory, and a plurality of input devices:
detecting, via a first one of the plurality of input devices, a primary input directed to a first candidate virtual spatial location of a computer-generated reality (CGR) environment, wherein the first candidate virtual spatial location is an output of an extremity tracking function based on the primary input;
detecting, via a second one of the plurality of input devices, a secondary input directed to a second candidate virtual spatial location of the CGR environment, wherein the second candidate virtual spatial location is an output of an eye tracking function based on the secondary input; and
positioning a user-controlled spatial selector to a virtual spatial location of the CGR environment as a function of the first and second candidate virtual spatial locations.

2. The method of claim 1, further comprising displaying, via a display device included in the electronic device, the user-controlled spatial selector at the virtual spatial location.

3. The method of claim 1, further comprising determining, based at least on a characteristic of the primary input and a characteristic of the secondary input, whether to use the secondary input in positioning the user-controlled spatial selector to the virtual spatial location

4. The method of claim 3, further comprising, in accordance with a determination not to use the secondary input, setting a nominal weight for the second candidate virtual spatial location.

5. The method of claim 1, wherein the first one of the plurality of input devices obtains CGR environment data that represents the CGR environment, the method further comprising providing the CGR environment data to an extremity tracking sensor that implements the extremity tracking function.

6. The method of claim 1, wherein the second one of the plurality of input devices obtains CGR environment data that represents the CGR environment, the method further comprising providing the CGR environment data to an eye tracking sensor that implements the eye tracking function.

7. The method of claim 6, further comprising determining, based on the secondary input, a depth estimation according to the eye tracking function, wherein the virtual spatial location is a further function of the depth estimation.

8. The method of claim 6, further comprising obtaining historical data associated with the eye tracking sensor, wherein the virtual spatial location is a further function of the historical data.

9. The method of claim 1, wherein the first and second candidate virtual spatial locations satisfy a proximity criterion with respect to each other.

10. The method of claim 1, further comprising:
determining a first confidence level for the first candidate virtual spatial location based on characteristics of the primary input; and
determining a second confidence level for the second candidate virtual spatial location based on characteristics of the secondary input;
wherein the virtual spatial location is a further function of the first and second confidence levels.

11. The method of claim 1, wherein CGR environment includes a plurality of virtual affordances, the method further comprising selecting a particular one of the plurality of virtual affordances based on the virtual spatial location.

12. The method of claim 11, wherein the plurality of virtual affordances satisfies a proximity criterion with respect to each other.

13. The method of claim 1, wherein the electronic device corresponds to a head-mountable device (HMD) that includes an integrated display device.

14. An electronic device comprising:
one or more processors;
a non-transitory memory;
a plurality of input devices; and
one or more programs, wherein the one or more programs are stored in the non-transitory memory and configured to be executed by the one or more processors to cause the one or more processors to perform the method of any one of claims 1 to 13.

15. A non-transitory computer readable storage medium storing one or more programs, the one or more programs comprising instructions, which, when executed by an electronic device with one or more processors and a plurality of input devices, cause the electronic device to perform the method of any one of claims 1 to 13.
